# EUROPEAN PATENT APPLICATION

(11) **EP 2 530 944 A1**
(43) Date of publication of application: **05.12.2012**
(21) Application number: 11382180.5
(22) Date of filing: 31.05.2011
(51) Int. Cl.: H04N 21/254, H04N 21/4627, G06F 21/00, H04L 29/06

(54) **Method for authorising**

(71) Applicant: Alcatel-Lucent España, S.A., 28050 Madrid (ES)
(72) Inventor: Villegas Nunez, Alvaro, 28033 Madrid (ES); Ruiz Alonso, Jaime, 28050 Madrid (ES)
(74) Representative: Elzaburu Marquez, Alberto

(57) **Abstract**

A method for authorising access to multimedia digital programmes with access control and broadcast by a subscriber management server (11) to descrambling devices (13) through a communications network, in which access request messages are transmitted for a reduced period of time, to a scrambled multimedia digital programme from descramblers (13) to a verifier server (12); comparison in the verifier server (12) of the request messages received with a specific trust level associated with a predetermined credit level stored in the verifier server (12) and in which each customer is assigned a credit level; if the comparison is positive, transmission of an access authorisation and descrambling key from the verifier server (12) to the descrambler (13), and retransmission of the authorised request messages received to the management server (11), when the multimedia digital programme is being played or has finished.

## Description

### FIELD OF INVENTION

This invention refers in general to the transmission of encrypted multimedia digital content to subscriber customer devices from a service provider.

### BACKGROUND

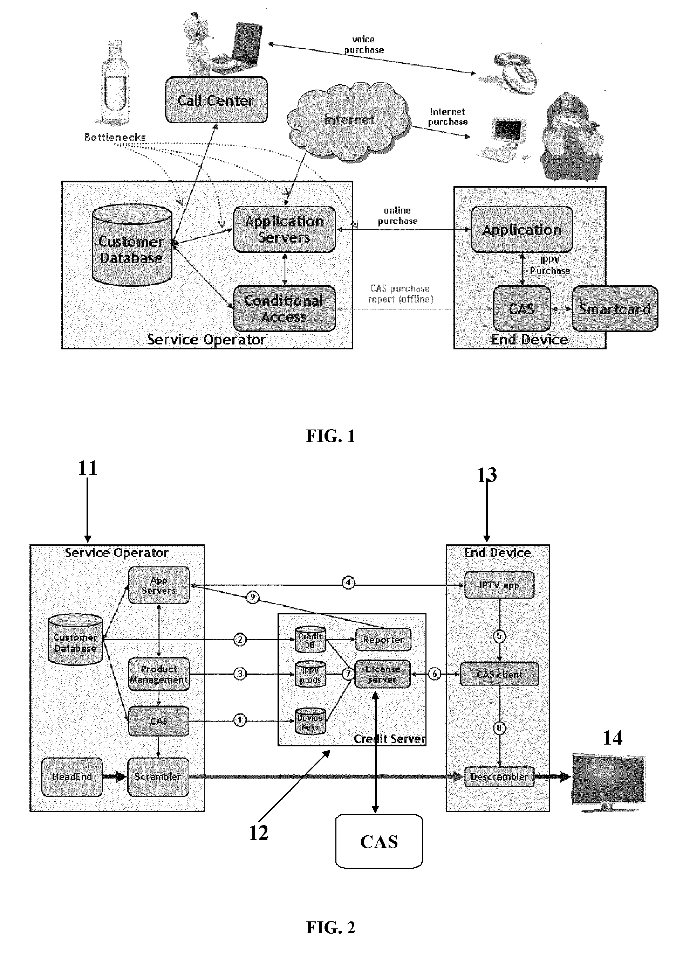

Figure 1 illustrates a pay-TV system and in a general manner, a subscriber selects an event or programme for desired viewing and pays to receive the selected programme.

The selected programme is transmitted scrambled in order to ensure that unauthorised customers cannot decode and descramble a payable event.

Encoded and scrambled multimedia digital programmes are broadcasted by a broadcast server through a diffusion communications network to a group of subscribers.

Pay-TV systems include pay-per-view services for purchasing events of the sporting fixture type such as a football match, or a film etc. thus enabling subscribers to purchase a specific event prior to its broadcast and also during transmission of the actual event.

A subscriber may purchase a specific event by making a telephone call to a subscriber management center in order to purchase a selected event.

In addition, the subscriber may also purchase the event through a customer television descrambling device or set-top-box STB to the subscriber's audiovisual screen. Through interaction with the purchase menu, the subscriber selects a desired event and through a return channel, the STB descrambler transmits a purchase message in the form of data stream which includes unique identification data of both the subscriber wishing to purchase the event and a subscriber application server.

One disadvantage of this system for purchasing an encoded scrambled multimedia digital event is the total time required to confirm and emit a purchase confirmation message to the subscriber when a large number of purchasing requests are received in a subscriber management centre, over a short period of time, with impulsive purchasing due to popular sporting events such as the final of a tennis tournament, or the final of the football World Cup for example.

The time required is based on the number of applications received, that is, the volume of data stream traffic and the number of subscribers making a request. Therefore, there may be a period of time passing, which may seem very long to the subscriber before the purchase can be validated by the management centre and the event may have actually begun, that is, the subscriber is only able to view part of the event having paid to view the whole fixture.

Furthermore, the management centre cannot validate the request to purchase a digital programme received from the subscriber and/or the management centre may not receive the purchase request itself due to the fact that it has received an avalanche of purchase requests resulting in a bottleneck at the management centre.

### SUMMARY

This invention seeks to resolve or reduce one or more of the disadvantages mentioned above by means of an authorisation method for accessing an encoded scrambled digital multimedia event through a broadcast communications network as defined in the claims.

In an embodiment of the authorisation method for accessing scrambled multimedia digital programmes with access control and broadcast in a one-way direction by a broadcast server to a set of customer descrambling devices through a communications network, it comprises the stages of transmission of a message requesting access to a broadcast scrambled multimedia digital programme, including a descrambling device identifier and an identifier of a specific multimedia digital programme, from the decoder to the access licence server; comparison in the licence server of the decoder identifier and the identifier of a specific multimedia digital programme broadcast with a specific level of credit stored in the licence server, if the comparison is positive, reduction of the value of the credit level stored by an amount depending on the type of digital multimedia programme; transmission of access authorisation and descrambling key from the licence server to the descrambler; retransmission of the authorised request message received to the broadcast server, once the multimedia digital programme is being broadcast or has finished in order to charge the subscriber and transmission from the broadcast server of a payment message in order to restore the credit level stored in the licence server.

One purpose of the access authorisation method is to avoid bottlenecks in a subscriber application server when the subscribers issue access authorisation requests to a predetermined encoded and scrambled multimedia digital programme with access control considered as massive, as access has been requested by a considerable number of subscribers in a short period of time before and/or during the broadcast of the scrambled programme.

Another purpose of the invention is to simplify the billing procedure for broadcasted scrambled programmes and to increase the security of the invoicing method thus preventing fraudulent intervention when charging the subscriber's account on the side of the network and not on the customer's side.

A further purpose is to provide a method for invoicing video and audio programmes broadcast with massive demand with simple scalability.

### BRIEF DESCRIPTION OF THE FIGURES

A more detailed explanation of devices and/or methods in accordance with embodiments of the invention are provided in the following description based on the attached figures in which:

Figure 1 shows a block diagram of an invoicing system for scrambled video and audio programmes with controlled access known in the state of the art,

Figure 2 shows a block diagram of an authorisation system for access to a scrambled video and audio programme with access control according to a method for authorising.

### DESCRIPTION OF EMBODIMENTS

With reference to figure 2, which shows a block diagram of a broadcast system of encoded and scrambled multimedia digital content in which a subscriber management server 11 is connectable to a broadcast server, no shown, of multimedia digital content, to a server 12 access verification and a set of STB customer descrambling devices through a broadcast communication network.

The verifier server 12 and the broadcast server are in turn, connectable to a specific number of client STB descramblers 13 via the same communications network of the Internet IP type for example.

The broadcast server transmits to the group of subscribers a one way encoded and scrambled multimedia digital data stream. Different service providers transmit digital video and audio programmes to the broadcast server so that it will broadcast the data stream which includes the encoded and scrambled multimedia digital programmes.

A predetermined programme selected by a subscriber is shown on an audiovisual screen 14 if the subscriber receives a positive access control signal from the verifier server 12, that is, the subscriber who has made an access request to a predetermined multimedia digital programme is a reliable subscriber due to the fact that the verifier server 12 has stored a predetermined value corresponding to a credit registration in a storage unit or data base of a CAS access control system.

The credit registration corresponds to a credit value associated with a credit signal transmitted from the management server 11 through the broadcast network.

The CAS access control is authorised to generate access authorisations to descrambling keys for scrambled digital programmes. The verifier server 12 transmits authorisations and keys to the subscribers making access requests for an encoded and scrambled programme.

When a subscriber subscribes to a predetermined service provider, the provider by the management server 11 generates a trust level value for the subscriber. The trust level is associated with a predetermined credit value. The CAS access control module database stores the value of the credit amount associated with the trust level of each subscriber.

The trust level and therefore, the value of the credit amount that the management server 11 assigns to a subscriber may be changed over time by the supplier.

In the event that a supplier forecasts that a particular event associated with a multimedia digital programme may be requested on a massive scale by subscribers, the management server 11 transmits in advance information data which includes a unique identifier associated with the predetermined multimedia digital programme, in the form of metadata, to the set of verifier servers 12 and to the subscribers' STB descramblers 13 by means of the broadcast network.

In addition, the management server 11 broadcasts advice messages associated with the event which is about to be broadcast, for example through the emission of advertisements in various formats, electronic programme guide, EPG etc.

Therefore, each subscriber wishing to acquire or purchase a massive digital programme knows the unique identifier corresponding to the programme he wishes to view.

In order to avoid overloading the management server 11 with access authorisation request messages which include the massive multimedia digital programme identifier, each request message is transmitted or retransmitted to the verifier server 12, in such a way that the number of messages that the verification server 12should manage is restricted. It should be noted that each verifier server 12 is connectable to a limited number of client STB devices 13.

The access request message is generated by an application for selecting a multimedia digital programme executed by the subscriber's STB descrambler 13.

The request message which includes the unique identifier of a programme associated with an event considered as massive and a similarly unique identifier of a subscriber STB descrambler 13, is transmitted from an STB descrambler 13 to a CAS control access module of the verifier server 12 in order to obtain an authorisation or authorisation data and the key for descrambling the CW control word.

The subscriber STB descrambler 13 descrambles the data corresponding to the scrambled multimedia digital programme with access control distributed from the broadcast server with the received control word CW.

The unique identifier included in the request message received in the CAS access control module of the verifier server 12, is identified by said module as being associated with a massive programme and, instead of forwarding the request message to the management server 11, the CAS control module compares that trust level associated with the unique identifier of the STB decoder 13 received and its associated credit threshold; if the comparison is positive, the CAS control module generates the corresponding access authorisation and the descrambler key so that it will be transmitted by verifier server 12 to the subscriber's STB descrambler 13. The multimedia descrambled programme data decoded by the STB descrambler 13 may be played immediately on the audiovisual viewing screen 14.

When the CAS control module makes a positive comparison, that is, corresponding to a predetermined trust level value and to a predetermined credit threshold, the trust level is maintained and the value of the stored credit amount associated with said level of trust, is reduced or charged at an amount assigned by the management server 11 to the scrambled multimedia digital programme selected or purchased by the subscriber.

In the event of a negative comparison, that is, the trust level assigned to the customer and/or the credit is negative, that is, the trust level assigned to the customer and/or the credit is inadequate, the verifier server 12 is not permitted to transmit an access authorisation and the corresponding descrambling key to enable the subscriber's STB decoder 13 to descramble the control word CW received in the ECM entitlement control message, for example, and in this way massive multimedia digital scrambling cannot be decoded with access control by the requesting subscriber's STB decoder 13. In this scenario, the verifier server 12 relays the message access authorization request received at management server 11 for this server allow or disallow the sending of a decryption key to the subscriber petitioner

The access control module CAS of the verifier server 12 may make several comparisons simultaneously for request messages which include the same unique massive programme identifier.

When the access control module CAS stops receiving access request messages which include the same massive programme unique identifier, that is, when the massive event has begun and/or finished, the verifier server 12, prompted by the access control module CAS, retransmits to the subscriber management server 11 the set of access request messages authorised by the access module based on the stored credit data. The access request messages are handled between the verifier server 12 and the management server 12 with an application programming interface API similar to an API used between the STB decoder 13 and the server manager 11 known in the state of the art.

The verifier server 12 makes the transmission in a distributed manner in order to avoid, in turn, overloading the management server 11.

The management server 11 which actually carries out the billing of the multimedia digital programme, associated with an event considered to be massive, for each requesting subscriber in a manner which is known in the state of the art.

Furthermore, the management server 11 generates and transmits reloading messages for restoring, increasing or reducing the amount of credit stored by the access control module CAS and/or modification messages for maintaining or changing the trust level associated with each requesting subscriber, based on the degree of satisfaction of the sums recharged and owed to account or billed to a subscriber.

It should be noted that the access authorisation method for an event considered to be massive is adapted to the pre-pay type billing system, payment subsequent to billing of the scrambled multimedia digital programme with access control broadcast by a broadcast server through a broadcast network.

However, the management server 11 avoids receiving all the request messages relating to a programme which is considered to be massive prior to and during the broadcast of said massive programme.

## Claims

1. **A method** for authorising for access to scrambled multimedia digital programmes with access control and broadcast one way by a management server (11) to a set of client descrambling devices (13) through a communications network; **characterised in that** the method comprises the stages of:
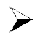 Transmitting of an access request message to a broadcast scrambled multimedia digital programme, including a descrambling device identifier (13) and an identifier of a specific multimedia digital programme, from the descrambler (13) to an access verifier server (12).
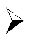 Comparing in the verifier server (12) of the descrambler identifier (13) and
of the identifier of a specific multimedia digital programme with a specific trust level associated with a predetermined credit level stored in the verifier server (12), if the comparison is positive,
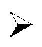 Reducing in the value of the credit level stored of an amount depending on the type of multimedia digital programme,
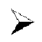 Transmitting of an access authorisation and descrambling key from the verifier server (12) to the descrambler (13),
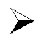 Retransmitting of the authorised request message received to the management server (11), when the multimedia digital programme is being broadcast or has finished, in order to charge the subscriber and
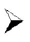 Transmitting from the management server (11) of a recharging message in order to re-establish the credit level stored in the verifier server (12).

2. **A broadcast server** connectable to a set of client descrambling devices (13) through a communications network and a management server (11) in order to broadcast scrambled multimedia digital programmes with access control; wherein the management server (11) is adapted to receive an access request for a broadcast scrambled multimedia digital programme, including a descrambling identification device (13) and an identifier of a specific multimedia digital programme, from an access verifier server (12), once the multimedia digital programme is being played or has finished.

3. **Server** according to claim 2; where the management server (11) is adapted to transmit a recharging message in order to re-establish a credit level stored in the verifier server (12).

4. **Server** according to claim 2; where the management server (11) is adapted to make the billing charge in a customer account associated with the requesting customer.

5. **A verifier server** for access to scrambled multimedia digital programmes broadcast one-way by a subscriber management server (11) to a set of client descrambling devices (13) through a communications network; wherein the verifier server (12) is adapted to receive an access request message to a scrambled broadcast multimedia digital programme, including a descrambling device identifier (13) and an identifier for a specific multimedia digital programme from the customer's descrambler (13).

6. **Server** according to claim 5; in which the verifier server (12) is adapted for comparing the descrambling identifier (13) and the identifier of the specific multimedia digital programme broadcast with a specific trust level associated with a predetermined stored credit level; if the comparison is positive the stored credit level is reduced by an amount depending on the type of multimedia digital programme and transmits an access authorisation and descrambling key to the decoder (13).

7. **Server** according to claim 6; in which the licence server (12) is adapted to retransmit the authorised request message received to the broadcast server (11), when the multimedia digital programme is being played or has finished.

8. **Server** in accordance with claim 6; in which the verifier server (12) is adapted to receive from the management server (11) a recharging message in order to re-establish the stored credit level.

9. **A computer** programme can be loaded in an internal buffer of a computer with input and output units and a processing unit, where the computer programme comprises codes which, when executed by the computer, cause the computer to perform the steps of claim 1.
